# EUROPEAN PATENT SPECIFICATION

(11) **EP 2 389 811 B1**
(45) Date of publication and mention of the grant of the patent: **19.09.2012**
(21) Application number: 10382150.0
(22) Date of filing: 31.05.2010
(51) Int. Cl.: A22C 15/00, B60P 3/05, A22B 7/00

(54) **A system for hanging hooks in refrigerated trucks and trailers and bodywork for refrigerated trucks and trailers including said system**
System zum Aufhängen von Haken in Kühlfahrzeugen und -anhängern sowie Karosserie für Kühlfahrzeuge und -anhänger mit dem besagten System
Système pour suspendre des crochets dans des camions et des remorques réfrigérés et châssis de camions et remorques réfrigérés incluant ledit système

(43) Date of publication of application: 30.11.2011
(73) Proprietor: Mixoy Moli, Antonio, 08330 Premia de Mar (ES)
(72) Inventor: Mixoy Moli, Antonio, 08330 Premia de Mar (ES)
(74) Representative: Ponti Sales, Adelaida

(56) References cited:
- DE-U- 7 117 450
- DE-U- 7 308 171
- DE-U1- 8 020 523
- FR-A- 1 395 350
- GB-A- 2 294 437

## Description

The present invention refers to a system for hanging hooks in the ceiling of refrigerated trucks and trailers and to a bodywork for refrigerated trucks and trailers including said system.

### BACKGROUND OF THE INVENTION

The refrigerated trucks and trailers usually present hooks at the ceiling of the truck or trailer for transporting e.g. meat pieces or carcasses. See for example DE 80205230.

However, it is usual that said refrigerated trucks and trailers make use of the return travel to load frozen products, which are normally in pallets or boxes. In these cases, it is advisable to remove or collect the hooks hanging from the ceiling to obtain more space and loading capacity.

The option of removing the hooks is not feasible taking into account that the number of hooks present in the truck or trailer can be very high (usually more than 250). On the other hand, this option it is not recommended according to a hygienic point of view, because the hooks can easily get dirty when they are removed, and they must be cleaned before they are hung again for transporting meat.

To solve these problems, some systems for hanging hooks at the ceiling of refrigerated trucks and trailers have been developed, permitting to collect the hooks in a position parallel with respect to the ceiling.

One of said systems includes a guide for hanging the hooks comprising a sliding groove of the hooks orientated facing towards the floor of the truck or trailer. Said groove includes inside it a bar or pivot from which plastic flanges hang, provided at the ends of the hooks.

To get more space inside the truck or trailer, the hooks are rotated about said bar or pivot to a collected position parallel to the ceiling. In this position, the hooks rest on a plate hanging from the ceiling to remain suspended in a horizontal position.

The described system for hanging hooks presents a lot of drawbacks.

In particular, it has been observed that in the collected position the hooks are quite separated from the ceiling, so that the use of the space is still very reduced.

### DESCRIPTION OF THE INVENTION

The object of the present invention is to solve said drawbacks, developing a system for hanging hooks from the ceiling of refrigerated trucks and trailers presenting the advantage that it permits to collect the hooks in a very simple and efficient way, occupying a very reduced space inside the truck or trailer.

According to this object, according to a first aspect, the present invention provides a system for hanging hooks comprising a guide with a sliding groove of said hooks, said groove including a first stretch orientated facing towards the floor when said guide is mounted at said ceiling, and it is characterized in that said guide comprises a second groove stretch orientated substantially perpendicular with respect to said first stretch, so that said second stretch permits to place the hooks in a collected position in which they are parallel next to the ceiling.

Differently from the prior art systems, the system of the present invention comprises a guide including two groove stretches of different orientations.

At the first stretch the hooks are placed in their vertical use position for hanging the goods. However, when we want to obtain more space inside the truck or trailer, the hooks are placed at the second stretch of the groove, which, as it is placed substantially perpendicular with respect to the first one, permits to place the hooks in a horizontal position very close to the ceiling.

Therefore, with the described system the hooks can be collected virtually in contact with the ceiling, so that the use of the space is maximum.

On the other hand, in the system of the present invention it is not necessary to provide the guide with a bar or pivot to swing the hooks, which also permits a greater use of the space, as it permits a design of the guide with very reduced dimensions. Furthermore, the use of hooks with plastic flanges is avoided to engage them to the bar or pivot, which reduces the maintenance costs of the system.

Thanks to said features, the system of the present invention reduces only to a few centimeters the space occupied by the hooks in their collected position, which permits a substantial increase of the goods storage capacity (pallets or boxes) of the truck or trailer.

Preferably, the guide comprises a third groove stretch between said first and second stretches for passing said hooks to said collected position.

Therefore, the hooks can slide from the first stretch to the second stretch not coming out from the guide, so that the system is very comfortable.

Advantageously, said guide comprises a circular cross-section profile including said second and third groove stretches.

The circular cross-section of the profile makes easier the execution of the transition stretch of the groove and, furthermore, it contributes to the reduction of the space occupied by the guide.

According to a preferred embodiment, the system comprises means for holding the hooks in said collected position when said hooks are placed in the second stretch of the groove.

These means are necessary only in the cases in which the hooks, instead of being rigid, are hinged, i.e. they comprise a hinge between the main body that holds the load and the engaging base to the guide.

If they are rigid, the hooks will remain in a position parallel to the ceiling, forced by the second stretch of the groove, having as support point the guide itself.

According to a second aspect, the present invention provides a bodywork for refrigerated trucks and trailers, which is characterized in that it comprises a system for hanging hooks from the ceiling as claimed.

Thanks to the features of the system, a multifunctional bodywork is obtained, satisfying the space needs of haulage contractors.

In the present invention, the expression that makes reference that the second stretch of the groove is orientated substantially perpendicular with respect to the first one must not be interpreted limiting this orientation to a strict angle of 90° of the second stretch with respect to the first one, but to those orientation which is enough to permit the hooks to be placed in said second stretch in a position substantially parallel to the ceiling.

### BRIEF DESCRIPTION OF THE DRAWINGS

For a better understanding of what has been described, some drawings are attached in which, diagrammatically and only as a non-limitative example a practical case of embodiment is shown.

In said drawings,

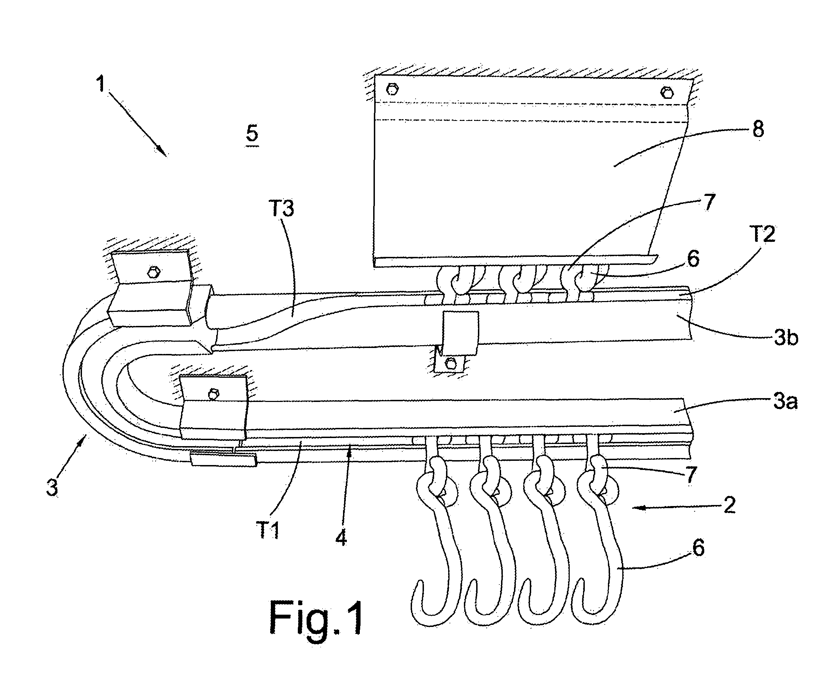

Fig. 1 is a lower perspective view of a preferred embodiment of the system of the present invention fixed to the ceiling of a refrigerated trailer;

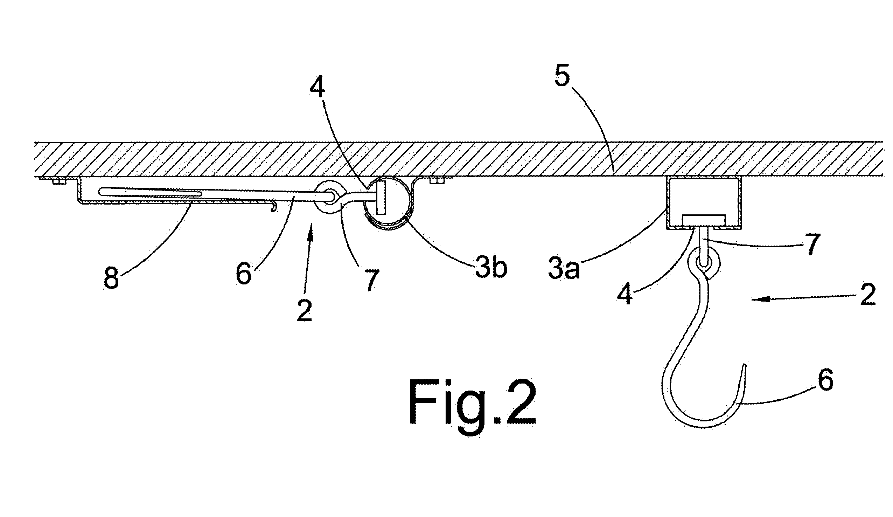

Fig. 2 shows a cross-section of the ceiling of the trailer in which the system of Fig. 1 is secured.

### DESCRIPTION OF A PREFERRED EMBODIMENT

Hereinafter a preferred embodiment of the system 1 for hanging hooks 2 according to the present invention is described.

As it can be seen in the figures, the system 1 comprises a guide 3 with a sliding groove 4 of the hooks 2, which is mounted on the ceiling 5 of a refrigerated trailer or semi-trailer.

In the described embodiment, the guide 3 includes a rectangular cross-section profile 3a with a first stretch T1 of the groove 4 orientated facing towards the floor of the trailer, and a circular cross-section profile 3b joined to the end of the rectangular profile 3a.

The circular profile 3b includes a second stretch T2 of the groove 4 orientated substantially perpendicular with respect to said first stretch T1 of the groove 4, and a third transition stretch T3 between said first stretch T1 and said second stretch T2.

As stated previously in the description of the invention, the circular cross-section of the profile 3b simplifies the execution of the third transition stretch T3 and contributes to reduce the dimensions of the guide 3.

In the normal use position, the hooks 2 are placed in the first stretch T1 of the groove 4 provided in the rectangular profile 3a, so that they hang vertically.

When it is necessary to obtain more space inside the trailer, the hooks 2 are moved to the second stretch T2 of the groove 4 provided in the circular cross-section profile 3b, passing through the third transition stretch T3, not coming out from the guide 3.

As seen in the figures, in the second stretch T2, the hooks 2 are placed in a collected position in which they virtually contact with the ceiling 5, so that the use of the space is maximum.

In the described embodiment, the hooks 2 are hinged, i.e. they comprise a hinge between the main body 6 that holds the load and the engagement base 7 with the guide, so that a plate 8 is provided in front of the stretch T2 of the profile 3b, for holding the body 6 in horizontal position.

Thanks to the described system 1, the haulage contractor can obtain more space and load capacity in the truck or trailer in a very simple and efficient way, collecting all the hooks 2 next to the ceiling 5.

Even though a specific embodiment of the present invention has been described and shown, it is apparent that a person skilled in the art could introduce variations and modifications or substitute the details by other technically equivalent ones, with departing from the scope of protection defined by the attached claims.

E.g. even though reference is made in the present specification to a guide 3 constituted from two profiles 3a, 3b, the same guide 3 could be constituted by a single profile with a rectangular or circular cross-section, including also two stretches of the groove 4 orientated at 90° to each other. In the same way, even though in the preferred embodiment reference is made to a system including a guide 3 with a third stretch T3 of the groove 4 for passing the hooks 2 to the collected position, the guide 3 could not include this third stretch T3 and the hooks 2 could be introduced in the stretch T2 removing them from the guide 3. On the other hand, even though in the preferred embodiment reference is made to hinged hooks 2, the same system 1 could be valid for rigid hooks 2, and in this case it would not be necessary to include a plate 8 to hold the main body 6 of the hook 2 in horizontal position.

## Claims

1. System for hanging hooks (2) from the ceiling (5) of refrigerated trucks and trailers, comprising a guide (3) with a sliding groove (4) for said hooks (2), said groove (4) including a first stretch (T1) orientated facing towards the floor when said guide (3) is mounted on said ceiling (5), **characterised in that** said guide (3) comprises a second stretch (T2) of the groove (4) orientated substantially perpendicular with respect to said first stretch (T1), so that said second stretch (T2) permits to place the hooks (2) in a collected position in which they are parallel next to the ceiling (5).

2. System according to claim 1, wherein said guide (3) comprises a third groove stretch (T3) between said first (T1) and second (T2) stretches for passing said hooks (2) to said collected position not coming out from the guide (3).

3. System according to anyone of claims 1 to 2, wherein said guide (3) comprises a circular cross-section profile (3b).

4. System according to anyone of claims 1 to 3, which comprises means (8) for holding said hooks (2) in said collected position when said hooks (2) are placed in said second stretch (T2) of the groove (4).

5. Bodywork for refrigerated trucks and trailers, **characterized in that** it comprises a system (1) for hanging hooks (2) according to anyone of claims 1 to 4.

## Patentansprüche

1. System zum Aufhängen von Haken (2) an der Decke (5) von Kühlfahrzeugen und -anhängern, das eine Führung (3) mit einer Nut (4) zum Gleiten der Haken (2) aufweist, wobei die Nut (4) ein erstes Ausdehnungselement (T1) umfasst, das in Ansicht auf den Boden ausgerichtet ist, wenn die Führung (3) an der Decke (5) angebracht ist,
**dadurch gekennzeichnet, dass**
die Führung (3) ein zweites Ausdehnungselement (T2) der Nut (4) aufweist, das im Wesentlichen senkrecht bezüglich des ersten Ausdehnungselements (T1) ausgerichtet ist, so dass das zweite Ausdehnungselement (T2) ermöglicht, die Haken (2) in einer gesammelten Position zu platzieren, in der sie parallel, benachbart zur Decke (5) angeordnet sind.

2. System nach Anspruch 1, wobei die Führung (3) ein drittes Nutausdehnungselement (T3) zwischen dem ersten (T1) und zweiten (T2) Ausdehnungselement aufweist, um die Haken (2) in die gesammelte Position, in der sie sich nicht aus der Führung (3) herausbewegen können, zu überführen.

3. System nach einem der Ansprüche 1 oder 2, wobei die Führung (3) ein kreisförmiges Querschnittsprofil (3b) aufweist.

4. System nach einem der Ansprüche 1 bis 3, das eine Einrichtung (8) zum Halten der Haken (2) in der gesammelten Position aufweist, wenn die Haken (2) sich in dem zweiten Ausdehnungselement (T2) der Nut (4) befinden.

5. Aufbau für Kühlfahrzeuge und -anhänger, **dadurch gekennzeichnet, dass** er ein System (1) zum Aufhängen von Haken (2) nach einem der Ansprüche 1 bis 4 aufweist.

## Revendications

1. Système pour suspendre des crochets (2) au plafond (5) de camions et remorques frigorifiques, comprenant un guide (3) avec une rainure de glissement (4) pour lesdits crochets (2), ladite rainure (4) comprenant une première partie (T1) orientée en direction du sol quand ledit guide (3) est monté sur ledit plafond (5), **caractérisé en ce que** ledit guide (3) comprend une deuxième partie (T2) de la rainure (4) orientée de façon essentiellement perpendiculaire par rapport à ladite première partie (T1), de sorte que ladite deuxième partie (T2) permet de placer les crochets (2) dans une position de rangement dans laquelle ils sont parallèles à côté du plafond (5).

2. Système selon la revendication 1, dans lequel ledit guide (3) comprend une troisième partie de rainure (T3) entre lesdites première (T1) et deuxième (T2) parties pour faire passer lesdits crochets(2) dans ladite position de rangement en ne sortant pas du guide (3).

3. Système selon l'une quelconque des revendications 1 à 2, dans lequel ledit guide (3) comprend un profilé de section circulaire (3b).

4. Système selon l'une quelconque des revendications 1 à 3, qui comprend des moyens (8) pour maintenir lesdits crochets (2) dans ladite position de rangement quand lesdits crochets (2) sont placés dans ladite deuxième partie (T2) de la rainure (4).

5. Carrosserie pour camions et remorques frigorifiques, **caractérisée en ce qu'**elle comprend un système (1) pour suspendre des crochets (2) selon l'une quelconque des revendications 1 à 4.
